(19) Europäisches Patentamt
European Patent Office
Office européen des brevets

(11) **EP 1 306 690 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
***G01S 17/93*** *(2006.01)* ***G01S 7/48*** *(2006.01)*

(21) Anmeldenummer: **02021121.5**

(22) Anmeldetag: **23.09.2002**

(54) **Verfahren zur Erkennung und Verfolgung von Objekten**

Method for recognising and tracking objects

Procédé de reconnaissance et de suivi d'objets

(84) Benannte Vertragsstaaten:
**AT BE BG CH CY CZ DE DK EE ES FI FR GB GR IE IT LI LU MC NL PT SE SK TR**

(30) Priorität: **28.09.2001 DE 10148064**

(43) Veröffentlichungstag der Anmeldung:
**02.05.2003 Patentblatt 2003/18**

(73) Patentinhaber: **SICK AG**
**79183 Waldkirch (DE)**

(72) Erfinder:
• **Lages, Ulrich, Dr.**
**21031 Hamburg (DE)**
• **Dietmayer, Klaus**
**89075 Ulm (DE)**
• **Streller, Daniel**
**89231 Neu-Ulm (DE)**
• **Fürstenberg, Kay**
**89075 Ulm (DE)**

(74) Vertreter: **Manitz, Finsterwald & Partner GbR**
**Postfach 31 02 20**
**80102 München (DE)**

(56) Entgegenhaltungen:
**EP-A- 0 564 858      EP-A- 0 631 154**
**EP-A- 0 973 121      EP-A- 1 020 736**
**DE-A- 19 926 559      US-A- 5 291 207**
**US-A- 5 475 494      US-A- 5 638 164**
**US-A- 6 125 191**

• **VERLY J G ET AL: "MODEL-BASED AUTOMATIC TARGET RECOGNITION (ATR) SYSTEM FOR FORWARDLOOKING GROUNDBASED AND AIRBORNE IMAGING LASER RADARS (LADAR)" PROCEEDINGS OF THE IEEE, IEEE. NEW YORK, US, Bd. 84, Nr. 2, 1. Februar 1996 (1996-02-01), Seiten 126-163, XP000555861 ISSN: 0018-9219**
• **STRELLER D ET AL: "Vehicle and object models for robust tracking in traffic scenes using laser range images" IEEE 5TH INTERNATIONAL CONFERENCE ON INTELLIGENT TRANSPORTATION SYSTEMS, 3. September 2002 (2002-09-03), Seiten 118-123, XP010608272**
• **TAE-DOK EOM ET AL: "Hierarchical object recognition algorithm based on Kalman filter for adaptive cruise control system using scanning laser" VEHICULAR TECHNOLOGY CONFERENCE, 1999 IEEE 49TH HOUSTON, TX, USA 16-20 MAY 1999, PISCATAWAY, NJ, USA, IEEE, US LNKD- DOI:10.1109/VETEC. 1999.778489, vol. 3, 16 May 1999 (1999-05-16), pages 2343-2347, XP010342308 ISBN: 978-0-7803-5565-1**

**Beschreibung**

Die vorliegende Erfindung betrifft ein Verfahren zur Erkennung und Verfolgung von Objekten auf der Basis von von wenigstens einem Sensor zur Erfassung elektromagnetischer Strahlung, insbesondere einem Laserscanner, erfaßten, tiefenaufgelösten, Bildpunkte enthaltenden Bildern von Gegenständen in einem Sichtbereich des Sensors, bei dem die Erkennung und Verfolgung unter Verwendung von den Objekten zugeordneten Modellen für die zeitliche Entwicklung von Positionsvariablen erfolgt, mit denen die Position des jeweiligen Objekts bestimmbar ist, einem der Objekte zuzuordnende Bildpunkte in dem Bild gesucht werden, bei Auffinden von dem Objekt zuzuordnenden Bildpunkten aus diesen aktuelle Meßwerte für die Position des Objekts gebildet und unter Verwendung der aktuellen Meßwerte für die Position des Objekts und von Schätzwerten der Positionsvariablen und/oder Meßwerten für die Position des Objekts aus einer vorhergehenden Iteration Schätzwerte für die Positionsvariablen für das Objekt in der aktuellen Iteration berechnet werden.

Verfahren der obengenannten Art sind grundsätzlich bekannt, siehe z.B. TAE-DOK EOM ET AL: "Hierarchical object recognition algorithm based on Kalman filter for adaptive cruise control system using scanning laser" VEHICULAR TECHNOLOGY CONFERENCE, 1999 IEEE 49TH HOUSTON, TX, USA 16-20 MAY 1999, PISCATAWAY, NJ, USA, IEEE, US LNKD- DOI:10.1109/VETEC.1999.778489, Bd. 3, 16. Mai 1999 (1999-05-16). Sie können u. a. dazu verwendet werden, einen in Fahrtrichtung vor einem mit einem entsprechenden Sensor ausgerüsteten Fahrzeug liegenden Bereich zu überwachen. Dabei soll insbesondere die Bewegung von Gegenständen vor dem Fahrzeug erfaßt werden, um gegebenenfalls geeignete Reaktionen einleiten zu können.

Bei einem solchen Verfahren kann beispielsweise ein Kalman-Filter verwendet werden, mit dem aus Meßwerten für die Position von Objekten, die aus Bildern eines entsprechenden Sensors bestimmt wurden, und mittels Modellen für die zeitliche Entwicklung der Position der Objekte Schätzwerte für die Position der Objekte ermittelt werden. Bei der Bestimmung der Schätzwerte wird nicht nur die deterministische zeitliche Entwicklung der Position der Objekte berücksichtigt, sondern es werden auch statistische Unregelmäßigkeiten bei der Erfassung der Meßwerte sowie statistische Abweichungen von der deterministischen Bewegung der Objekte einbezogen. Diese statistischen Schwankungen werden über ihre Varianzen und Kovarianzen berücksichtigt. Um in einem Bild Objekte wiederzuerkennen bzw. wiederzufinden, wird auf der Basis prädizierter Positionen der Objekte und prädizierter Varianzen und Kovarianzen der Meßwerte für die Positionen der Objekte ein Suchbereich definiert, in dem mit vorgegebener Wahrscheinlichkeit das jeweilige Objekt zu finden sein sollte. Ein gutes Objekterkennungs- und -verfolgungsverfahren zeichnet sich dadurch aus, daß die Varianzen und Kovarianzen der statistischen Schwankungen so gewählt werden, daß einerseits Objekte in einem gegebenen Suchbereich mit großer Sicherheit wiedergefunden werden und andererseits die Schätzwerte für die Positionen der Objekte, die ausgegeben und von anderen Anwendungen genutzt werden können, deren Position gut wiedergeben.

Bei der Verwendung von Sensoren mit einer sehr hohen Meßgenauigkeit werden die Einflüsse der statistischen Schwankungen im wesentlichen von den statistischen Abweichungen der deterministischen Bewegung der Objekte bzw. der durch sie dargestellten Gegenstände bestimmt. Dies kann jedoch dazu führen, daß durch das Verfahren ermittelte Schätzwerte für die Positionen der Objekte vergleichsweise stark von den aktuell ermittelten Meßwerten für die Positionen der Objekte abweichen.

Es ist Aufgabe der vorliegenden Erfindung, ein gattungsgemäßes Verfahren bereitzustellen, bei dem eine hohe Genauigkeit geschätzter Werte für die Position von Objekten erreicht wird.

Die Aufgabe wird gelöst durch ein gattungsgemäßes Verfahren mit den kennzeichnenden Merkmalen des Anspruchs 1.

Ein erfindungsgemäßes Verfahren ist dadurch gekennzeichnet, daß die Beiträge der aktuellen Meßwerte für die Position des Objekts einerseits und der Schätzwerte der Positionsvariablen und/oder Meßwerte für die Position des Objekts aus einer vorhergehenden Iteration andererseits in Abhängigkeit von einem Gewichtungsparameter gegeneinander gewichtet werden, der von einem aus dem Bild ermittelten Gütewert der aktuellen Meßwerte abhängt, wobei die Abhängigkeit des Schätzwerts von den Meßwerten mit zunehmendem Gütewert der Meßwerte zumindest in einem vorgegebenen Bereich von Gütewerten zunimmt.

Bei dem erfindungsgemäßen Verfahren werden tiefenaufgelöste Bilder von Gegenständen in einem Sichtbereich eines Sensors zur Erfassung elektromagnetischer Strahlung verwendet.

Unter einem tiefenaufgelösten Bild eines Sensors zur Erfassung elektromagnetischer Strahlung wird eine Menge von bei einer Abtastung des Sichtbereichs des Sensors erfaßten Bildpunkten verstanden, denen Punkte bzw. je nach Auflösung des Sensors auch Bereiche eines von dem Sensor erfaßten Gegenstands entsprechen, wobei die Bildpunkte der Lage der zugehörigen Gegenstandspunkte entsprechende Koordinaten in wenigstens zwei Dimensionen umfassen, die nicht beide senkrecht zur Blickrichtung des Sensors stehen. Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren für elektromagnetische Strahlung zur Erfassung solcher tiefenaufgelöster Bilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfaßt. Die so erfaßten Rohdaten für einen Bildpunkt können dann als Koordinaten den Winkel, bei dem der Reflex erfaßt wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Unter Positionsvariablen werden Variablen verstanden, mit denen jeweils die zeitlich veränderlichen Positionen von Objekten beschreibbar sind. Insbesondere kann es sich hierbei um entsprechende Koordinaten für einen Bezugspunkt eines Objekts handeln, mit dem die Position des Objekts festlegbar ist.

Die Erkennung und Verfolgung von Objekten erfolgt auf der Basis von Modellen, mit denen die zeitliche Entwicklung der Positionsvariablen wenigstens näherungsweise beschreibbar ist, wobei sich Art und Komplexität der Modelle unter anderem nach dem Objekterkennungs- und -verfolgungsverfahren sowie nach der Art der typischerweise auftretenden, zu verfolgenden Gegenstände richten können.

Zur Verfolgung und Erkennung von Objekten, die Gegenstände in einem erfaßten Bild darstellen, werden in dem Bild einem der Objekte zuzuordnende Bildpunkte gesucht und bei Auffinden von dem Objekt zuzuordnenden Bildpunkten aus diesen Meßwerte für die Position des Objekts gebildet. Hierbei kann insbesondere eine Segmentierung verwendet werden, bei der aus Bildpunkten des Bildes zunächst Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen. Bei diesem Segmentierungskriterium kann es sich insbesondere um ein Kriterium für einen maximal zulässigen Abstand und/oder einen maximal zulässigen Unterschied einer optischen Eigenschaft, insbesondere der Reflektivität, handeln. Weiterhin kann bei Verwendung eines Laserscanners auch eine aus Pulsbreiten und/oder -höhen bestimmte Neigung einer Fläche verwendet werden.

Die Zuordnung von Bildpunkten zu einem Objekt erfolgt dann durch Zuordnung von Segmenten, die Bildpunkte enthalten, zu Objekten.

Je nach Definition der Position des Objekts, beispielsweise über entsprechende Koordinaten für einen Bezugspunkt des Objekts, werden aus den zuzuordnenden Bildpunkten Meßwerte für die Position des Objekts gebildet. Dies kann unmittelbar über die Koordinaten der Bildpunkte erfolgen. Es ist jedoch auch möglich, Objekte durch Objektboxen darzustellen, die Form und Größe des durch das Objekt dargestellten Gegenstands näherungsweise wiedergeben und deren durch einen entsprechenden Bezugspunkt, beispielsweise den Schwerpunkt, bestimmte Positionen als Positionen der Objekte, denen sie als Eigenschaft zugeordnet sind, definiert werden. Die Zuordnung von Bildpunkten zu einem solchen Objekt erfolgt dadurch, daß entsprechende Bildpunkte innerhalb einer Objektbox liegen müssen.

Unter Verwendung der aktuellen Meßwerte für ein Objekt und von Schätzwerten der Positionsvariablen und/oder Meßwerten für die Position des Objekts in einer vorhergehenden Iteration wird dann ein Schätzwert für die Positionsvariablen für das Objekt berechnet. Bei Verwendung eines Kalman-Filters kann die Verwendung des Schätzwertes für eine Positionsvariable erfolgen, indem aus diesem zunächst ein prädizierter Wert für die gemessene Position berechnet wird. Erfindungsgemäß geschieht dies dadurch, daß die Beiträge der aktuellen Meßwerte für die Position und der Schätzwerte der Positionsvariablen und/oder Meßwerte für die Position des Objekts in einer vorhergehenden Iteration in Abhängigkeit von einem Gewichtungsparameter gegeneinander gewichtet werden, der von einem aus dem Bild ermittelten Gütewert der Meßwerte abhängt. Dabei nimmt die Abhängigkeit des Schätzwerts von dem Meßwert mit zunehmendem Gütewert des Meßwerts wenigstens in einem vorgegebenen Bereich von Gütewerten zu.

Unter einem aus dem Bild ermittelten Gütewert eines Meßwerts wird hierbei ein Wert verstanden, der ein Maß dafür ist, wie zuverlässig der aktuell erfaßte Meßwert ist. Der Gütewert kann dabei von Gegebenheiten in dem erfaßten Bild abhängen, da die Bestimmung der Lage eines Objekts anhand der erfaßten, diesem Objekt zugeordneten Bildpunkte erfolgt. Die Anzahl und Lage der Bildpunkte können jedoch von einer Reihe von Faktoren abhängen, insbesondere der Ausdehnung und Lage des Objekts selbst wie auch der Ausdehnung und Lage anderer Objekte in dem Bild, so daß beispielsweise die Anzahl der zur Bestimmung des Meßwerts zur Verfügung stehenden Bildpunkte je nach Objekt und im Laufe des Verfahrens stark variieren kann.

Weiterhin hängt der Gewichtungsparameter wenigstens in einem bestimmten Bereich von Gütewerten streng monoton von den Gütewerten ab, d.h. nimmt mit zunehmenden Gütewerten zu. Vorzugsweise kann der Gewichtungsparameter über den gesamten Bereich möglicher Gütewerte monoton von dem Gütewert abhängen.

Hierdurch ist es möglich, in Abhängigkeit von aus dem aktuellen Bild ermittelten Gütewerten für die Meßwerte diese bei der Bestimmung der Schätzwerte der Positionsvariablen stärker zu berücksichtigen, was insbesondere bei Sensoren mit einer hohen Meßgenauigkeit sinnvoll ist. Meßwerte mit hohen Gütewerten werden daher in den Schätzwert für die Position des Objekts stärker eingehen, so daß der Schätzwert näher bei dem mit hoher Meßgenauigkeit erfaßten Meßwert liegt.

Bevorzugt kann der Gewichtungsparameter nicht nur von dem Gütewert für die Meßwerte für die Position eines Objekts abhängen, sondern auch von geschätzten oder prädizierten Varianzen und/oder Kovarianzen der den Meßwerten für die Position zugrundeliegenden Meßgrößen bzw. der Positionsvariablen und/oder der Wahrscheinlichkeitsverteilungen. Dies erlaubt insbesondere die Einbindung in Objekterkennungs- und verfolgungsverfahren, bei denen Schätzwerte in einer aktuellen Iteration unter Verwendung der Schätzwerte aus einer vorhergehenden Iteration und der Meßwerte ermittelt werden.

Besonders bevorzugt kann die Gewichtung dadurch erreicht werden, daß zur Objekterkennung und -verfolgung ein Kalman-Filter verwendet wird, wobei die Varianzen und/oder Kovarianzen des Rauschens in der Beziehung für die Zeitentwicklung der Positionsvariablen in Abhängigkeit von dem Gütewert bestimmt werden. Insbesondere werden die Varianzen und/ oder Kovarianzen für eine höhere Gewichtung reduziert. Hierdurch wird eine mit der Veränderung der Gewichtung konsistente Veränderung des Suchbereichs erreicht.

Bei dem erfindungsgemäßen Verfahren ist es bevorzugt, daß in dem Bild für jedes Objekt ein Suchbereich ermittelt wird, in dem nach dem Objekt zuzuordnenden Bildpunkten gesucht wird, dessen Lage von den Schätzwerten der Positionsvariablen und/oder den Meßwerten für die Position des Objekts aus einer vorhergehenden Iteration abhängt, und dessen Größe unabhängig von dem in der vorhergehenden Iteration ermittelten Gütewert ist.

Unter dem Merkmal, daß die Größe des Suchbereichs unabhängig von dem in der vorhergehenden Iteration ermittelten Gütewert ist, wird hierbei verstanden, daß in einer zur Bestimmung des Suchbereichs für eine Iteration verwendeten Beziehung der Gewichtungsparameter nicht verwendet wird. Hierdurch wird erreicht, daß zwar die Abweichung eines aktuellen Schätzwerts für eine Objektposition von dem aktuellen Meßwert für die Objektposition in Abhängigkeit von dem Gütewert reduziert werden kann, so daß der ermittelte Schätzwert, insbesondere bei Verwendung von Sensoren mit hoher Meßgenauigkeit, die tatsächliche Position des Objekts sehr genau wiedergibt, gleichzeitig aber die Größe des Suchbereichs von dem ermittelten Gütewert unabhängig bleibt und insbesondere nicht durch hohe Gütewerte verringert wird. Es wird also die bei dem bekannten Kalman-Filter gegebene einheitliche Behandlung von Schätzwerten und Varianzen bzw. Kovarianzen aufgegeben. Dies kann insbesondere in Situationen mit hoher und wenig vorhersagbarer Dynamik der verfolgten Gegenstände vorteilhaft sein.

Bevorzugt ist es weiterhin, daß der Schätzwert als durch den Gewichtungsparameter parametrisierter, gewichteter Mittelwert aus dem Meßwert und einem anderen, von dem Schätzwert der Positionsvariablen oder dem Meßwert für die Position in einer vorhergehenden Iteration abhängenden Wert gebildet wird. Hierdurch ergibt sich eine besonders einfache und überschaubare Abhängigkeit des erfindungsgemäßen Schätzwertes von dem Gewichtungsparameter. Der andere, von einem Wert der Positionsvariablen in einer vorhergehenden Iteration abhängige Wert kann von dem Schätzwert der Positionsvariablen in einer vorhergehenden Iteration insbesondere linear abhängen.

Besonders bevorzugt wird ein Kalman-Filter verwendet, bei dem die Ermittlung des Schätzwertes der Positionsvariablen erfindungsgemäß erfolgt und der erfindungsgemäß ermittelte Schätzwert im weiteren Verfahrensverlauf an Stelle des nach dem bekannten Verfahren für die Kalman-Filterung ermittelten Schätzwertes verwendet wird. Für jedes Objekt kann dann ein Suchbereich definiert werden, dessen Lage in Abhängigkeit von dem erfindungsgemäß ermittelten Schätzwert der Positionsvariablen einer vorhergehenden Iteration und dessen Größe in Abhängigkeit von den von dem Gewichtungsparameter unabhängigen Varianzen und Kovarianzen der statistischen Schwankungen für die zeitliche Entwicklung der Positionsvariablen und der statistischen Fehler bei der Ermittlung der Meßwerte der Positionen der Objekte ermittelt wird.

Die Zuverlässigkeit von Meßwerten für die Positionen eines Objekts kann insbesondere von dem Auflösungsvermögen des Sensors abhängen. Es ist daher bevorzugt, daß in dem Gewichtungsparameter das Auflösungsvermögen des Sensors im Bereich der dem Objekt zugeordneten Bildpunkte berücksichtigt wird. Hierdurch kann insbesondere berücksichtigt werden, daß Sensoren zur Erfassung tiefenaufgelösten Bilder, insbesondere Laserscanner, in Abhängigkeit von dem Abstand und der Winkellage zu den Gegenständen ein sehr unterschiedliche Auflösungsvermögen aufweisen können, so daß durch mehrere Bildpunkte ermittelte Meßwerte für die Position von Objekten in Abhängigkeit von der Lage der Objekte eine unterschiedliche Güte aufweisen können.

Insbesondere bei einem Laserscanner, bei dem ein Strahlungsbündel einen vorgegebenen Winkelbereich überstreicht, kann sich das Auflösungsvermögen mit zunehmendem Abstand eines Gegenstands von dem Sensor deutlich verschlechtern, was bei der Ermittlung des Gütewertes berücksichtigt werden kann. Es ist daher bevorzugt, daß der Gewichtungsparameter von einem Abstand der zur Bildung der Meßwerte verwendeten, dem Objekt zugeordneten Bildpunkte von dem Sensor abhängt. Bei diesem Abstand kann es sich insbesondere um den mittleren Abstand der dem Objekt zugeordneten Bildpunkte von dem Sensor handeln.

Weiterhin ist es bevorzugt, daß zur Klassifizierung von Objekten mehrere Objektklassen vorgesehen werden, die wenigstens eine Eigenschaft von Objekten betreffen, die aus wenigstens einem der tiefenaufgelösten Bilder bestimmbar ist, daß dem Objekt eine der Objektklassen zugeordnet ist, und daß der Gewichtungsparameter In Abhängigkeit von der Objektklasse des Objekts bestimmt wird.

Vorzugsweise kann die Objektklasse dadurch bestimmt sein, daß sie Gegenständen mit bestimmten geometrischen Eigenschaften, also insbesondere bestimmten Formen und Größen, entspricht. Dabei können die Formen nur sehr abstrahiert und damit einfach vorgegeben sein und die Größen innerhalb eines vorgegebenen Wertebereichs liegen.

Bei einer Verwendung des erfindungsgemäßen Verfahrens zur Überwachung eines Bereichs vor einem Fahrzeug kann eine solche Klassifizierung nach geometrischen Kriterien insbesondere auch eine entsprechende Zuordnung von objektklassenspezifischen Modellen erlauben. Die Verwendung von Objektklassen ist in der deutschen Patentanmeldung mit dem anwaltlichen Aktenzeichen S7880 DE 10148071.7 mit dem Titel "Verfahren zur Erkennung und Verfolgung von Objekten", die am gleichen Tag wie die vorliegende Anmeldung von der gleichen Anmelderin eingereicht wurde und deren Inhalt hiermit durch Bezugnahme in die vorliegende Anmeldung aufgenommen wird, genauer beschrieben. Insbesondere kann die Objektklasse mehrere Eigenschaften von Gegenständen, die durch Objekte der Objektklasse darstellbar sind, umfassen, die jedoch nicht alle aus nur einem Bild bestimmbar sind. Hierdurch kann eine Gewichtung des Meßwerts in Abhängigkeit insbesondere von dynamischen Eigenschaften der Objekte besser berücksichtigt werden.

Besonders bevorzugt ist es, daß der Gütewert für den Meßwert der Position des Objekts in Abhängigkeit von der Objektklasse des Objekts bestimmt wird. Hierdurch lassen sich objektklassenspezifische Besonderheiten bei der Ermittlung des Meßwerts berücksichtigen. So werden etwa bei Lastkraftwagen häufig nur sehr unregelmäßige Konturen erfaßt, was darauf zurückzuführen ist, daß beispielsweise bei Verwendung eines Laserscanners, der in Kühlerhöhe an einem Personenkraftwagen angebracht ist, Bildpunkte in einer Höhe erfaßt werden, in der unverkleidete Teile des Fahrgestells des Lastkraftwagens den Umriß des Lastkraftwagens bilden, die in einem tiefenaufgelösten Bild als getrennte Segmente in Erscheinung treten können.

Eine hohe Gewichtung von Meßwerten in einem Schätzwert kann insbesondere in Situationen wünschenswert sein, in denen die von dem Sensor erfaßten Gegenstände eine hohe Dynamik aufweisen oder eine solche zu erwarten ist. Es ist daher bevorzugt, daß der Gewichtungsparameter situationsadaptiv verändert wird. Dies kann alternativ oder kumulativ zu der Abhängigkeit von der Güte erfolgen. Insbesondere kann alternativ oder kumulativ die Abhängigkeit des Gewichtungsparameters von dem Gütewert entsprechend der Situation angepaßt werden. Bei Verwendung des erfindungsgemäßen Verfahrens zur Überwachung des Straßenverkehrs vor einem mit dem Sensor versehenen, fahrenden Fahrzeug kann beispielsweise bei Feststellung ungewöhnlicher Fahrsituationen, insbesondere der Gefahr einer Kollision, der Einfluß des Gütewertes auf den Gewichtungsparameter erhöht werden, so daß Meßwerte stärker berücksichtigt werden.

Ein Meßwert für die Position eines Objekts sollte als besonders zuverlässig angesehen werden, wenn Bildpunkte entlang der Kontur des Objekts bzw. des durch das Objekt dargestellten Gegenstands erfaßt werden. Es ist daher bevorzugt, daß dem Objekt als statische Eigenschaft eine Objektbox zugeordnet ist, die eine Ausdehnung des Objekts in der Bildebene darstellt, eine bestimmte Form und Größe aufweist, und hinsichtlich Form und Größe dem durch das Objekt dargestellten Gegenstand entspricht, und daß der Gütewert in Abhängigkeit von den minimalen Abständen zwischen in der Objektbox liegenden Bildpunkten und dem Rand der Objektbox und von der Anzahl der in der Objektbox liegenden Bildpunkte bestimmt wird.

Insbesondere bei Gegenständen, deren Kontur durch einfache geometrische Formen in guter Näherung darstellbar ist, kann hierdurch ein besonders aussagekräftiger Gütewert gebildet werden. Dies trifft beispielsweise für Gegenstände auf Fahrbahnen, insbesondere Kraftfahrzeuge, zu. Besonders bevorzugt wird die Form und Größe der Objektbox in Abhängigkeit von einer dem Objekt zugeordneten Objektklasse bestimmt, wobei vorzugsweise die Größe der Objektbox im Verlauf des Verfahrens entsprechend der tatsächlichen Ausdehnung des Gegenstands adaptiert wird. Adaptierbare und nichtadaptierbare Objektboxen sind in der deutschen Patentanmeldung mit dem anwaltlichen Aktenzeichen S7875 DE 10148068.7 und dem Titel "Verfahren zur Erkennung und Verfolgung von Objekten" beschrieben, die am gleichen Tag wie die vorliegende Anmeldung von derselben Anmelderin eingereicht wurde und deren Inhalt hiermit durch Bezugnahme in die vorliegende Anmeldung aufgenommen wird.

Eine hohe Zuverlässigkeit bzw. Genauigkeit des Meßwerts für die Position eines Objekts ist weiterhin dann zu erwarten, wenn eine große Anzahl von Bildpunkten zur Bestimmung der Position des Objekts verwendet wurde. Es ist daher bevorzugt, daß dem Objekt eine Ausdehnung zugeordnet ist, und daß der Gütewert unter Verwendung der Anzahl der dem Objekt zugeordneten Bildpunkte und einer Referenzanzahl von Bildpunkten für das Objekt und/oder der Länge der Umfangslinie des Objekts und/oder der Fläche des Objekts ermittelt wird.

Bei der Referenzanzahl von Bildpunkten des Objekts kann es sich beispielsweise um eine in der gegebenen Lage der Bildpunkte bzw. des Objekts relativ zum Sensor theoretisch berechenbare, maximal mögliche Anzahl von Bildpunkten des Objekts handeln. Es kann jedoch auch vorgesehen sein, daß eine maximal mögliche Anzahl bei einer vorgegebenen Standardentfernung bzw. Lage des Objekts zu dem Sensor verwendet wird. Schließlich ist es auch denkbar, die maximal mögliche Anzahl von Bildpunkten bei Variation über alle möglichen Lagen zu dem Sensor und unter Berücksichtigung des Auflösungsvermögens des Sensors zu verwenden. Der Gütewert kann aber beispielsweise auch aus dem Verhältnis der Anzahl der erfaßten Bildpunkte zu der Länge der Umfangslinie des Objekts bzw. einer dem Objekt zugeordneten Objektbox bestimmt werden. Ein so bestimmter Gütewert kann insbesondere eine einheitliche Bewertung der Meßwerte auch von Objekten sehr unterschiedlicher Ausdehnung zulassen.

Besonders bevorzugt kann die Ausdehnung des Objekts durch eine Objektbox gegeben sein, die dem Objekt als statische Eigenschaft zugeordnet ist, eine Ausdehnung des Objekts in der Bildebene darstellt, eine bestimmte Form und Größe aufweist und hinsichtlich Form und Größe dem durch das Objekt dargestellten Gegenstand entspricht.

Im Hinblick auf die Objektbox gelten die vorstehenden Ausführungen. Vorzugsweise ist den Objekten, wie bei anderen Weiterbildungen des erfindungsgemäßen Verfahrens bereits beschrieben, eine Objektklasse zugeordnet, die die Objektbox bis auf eine mögliche Adaption bestimmt. Diese Weiterbildung der Erfindung hat den Vorteil, daß die maximal mögliche Anzahl von Bildpunkten, die Länge der Umfangslinie eines Objekts und die Fläche eines Objekts über die dem Objekt zugeordnete Objektbox einfach und weitgehend standardisiert angegeben werden können.

Je nach Lage der Gegenstände in dem Sichtbereich des Sensors kann der Fall eintreten, daß ein Teil eines Gegenstands durch einen anderen Gegenstand verdeckt wird. In diesem Falle ist die Anzahl der zur Bestimmung des Meßwerts für die Position des Objekts verwendeten Bildpunkte vergleichsweise klein. Es ist daher bevorzugt, daß vor der Ermittlung des Gütewerts eine Verdeckungserkennung durchgeführt wird, bei der geprüft wird, ob ein Teil des durch das Objekt dargestellten Gegenstands durch einen zwischen dem Sensor und dem Gegenstand liegenden weiteren Gegenstand verdeckt ist, und daß bei der Bestimmung des Gütewerts eine erkannte Verdeckung berücksichtigt wird.

Dies kann insbesondere dadurch erfolgen, daß verdeckte Bildpunkte unter Verwendung erfaßter Bildpunkte und Annahmen über die Form des erkannten Objekts rekonstruiert und zur Bestimmung des Meßwerts für die Position des Objekts verwendet werden. Hierbei sind erfindungsgemäße Verfahren besonders bevorzugt, bei denen allen Objekten, insbesondere objektklassenspezifische, Objektboxen zugeordnet sind. Bei der Ermittlung des Gütewertes kann dann die um die Anzahl der rekonstruierten Bildpunkte erhöhte Anzahl von erfaßten Bildpunkten verwendet werden. Es ist jedoch auch möglich, für die aktuelle Bestimmung des Gütewertes die maximal mögliche Anzahl von Bildpunkten des Objekts entsprechend zu reduzieren.

Bei einer weiteren bevorzugten Ausführungsform des erfindungsgemäßen Verfahrens wird dem Objekt als statische Eigenschaft eine Objektbox zugeordnet, die eine Ausdehnung des Objekts in der Bildebene darstellt, eine bestimmte Form und Größe aufweist und hinsichtlich Form und Größe dem durch das Objekt dargestellten Gegenstand entspricht. Aus den Bildpunkten eines Bildes werden dann Segmente gebildet, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen. Bei diesem Segmentierungskriterium kann es sich insbesondere um ein Kriterium für einen maximal zulässigen Abstand und/oder einen maximal zulässigen Unterschied einer optischen Eigenschaft, insbesondere der Reflektivität, handeln. Weiterhin kann bei Verwendung eines Laserscanners auch eine aus Pulsbreiten und/oder -höhen bestimmte Neigung einer Fläche verwendet werden. Weiterhin wird für das Objekt ein Suchbereich bestimmt, in dem Suchbereich nach dem Objekt zuzuordnenden Segmenten gesucht und bei Auffinden eines Segments dieses dem Objekt zugeordnet. In dem Fall, daß im Suchbereich kein dem Objekt zuzuordnendes Segment gefunden wird, aber ein Segment vorhanden ist, daß keinem anderen Objekt zuzuordnen ist, wird das Segment dem Objekt zugeordnet und der Gewichtungsparameter so gesetzt, daß der Schätzwert der Position des Objekts durch den unter Verwendung der Bildpunkte des zugeordneten Segments gebildeten Meßwert gegeben ist, wenn die Objektbox so positionierbar ist, daß das Segment in der Objektbox liegt. Entsprechendes gilt, wenn mehrere nicht einem der Objekte zuzuordnende Segmente gefunden werden, die von der Objektbox einschließbar sind.

In diesem Fall kann davon ausgegangen werden, daß sich das Objekt vollkommen untypisch verhalten hat und deswegen der Meßwert der Position die tatsächliche Position des Objekts am besten wiedergibt. Beispielsweise kann es sich hierbei um ein Kraftfahrzeug handeln, daß aus einer relativ stabilen Fahrsituation heraus plötzlich auf ein Hindernis prallt und dadurch nicht mehr im Suchbereich zu finden ist, der aufgrund der prädizierten Position des Kraftfahrzeugs wesentlich weiter vor dem Ort der Kollision liegt.

Das erfindungsgemäße Verfahren ist weiterhin auf andere Meßgrößen, deren Meßwerte aus einem Bild bestimmbar sind und denen entsprechende Zustandsvariable, die einen zeitlich veränderlichen Zustand eines Objekts beschreiben und zur Objekterkennung und -verfolgung benutzt werden, entsprechend erweiterbar. Hierbei kann es sich insbesondere um die Orientierung eines Objekts, d. h. einen Winkel zwischen einer vorgegebenen Achse des Objekts und einer vorgegebenen Achse des Sensors oder einer ortsfesten Achse handeln. Die oben genannten Operation sind dann direkt auf eine Orientierungsvariable als Zustandsvariable und Meßwerte der Orientierung übertragbar. Darüber können beispielsweise auch Meßgrößen hinsichtlich der Größe des Objekts, beispielsweise Breiten und Längen verwendet werden, wenn diese als dynamische Parameter verwendet werden.

Das erfindungsgemäße Verfahren ist auch auf die Verwendung anderer Sensoren wie beispielsweise Radarsensoren oder Videokameras übertragbar und stellt in dieser Form ebenfalls einen Gegenstand der Erfindung dar. Bei der Verwendung solcher Sensoren erfolgt die Objekterkennung und Verfolgung unter Verwendung anderer Zustandsvariablen, die vom Typ her den von diesen Sensoren erfaßbaren Meßdaten entsprechen. So ist für einen Radarsensor statt der Positionsvariablen eine Geschwindigkeitsvariable für die Geschwindigkeit eines Objekts in radialer Richtung zu verwenden, für eine Videokamera beispielsweise eine Pixelanzahl eines Objekts. In diesen Fällen müssen natürlich dementsprechende Modelle für die Zeitentwicklung dieser Zustandsvariablen vorgesehen sein. Weiterhin ist unter dem Suchbereich ein Suchbereich in dem abstrakten Raum der Meßgrößen, beispielsweise bei Verwendung von Radarsensoren im Geschwindigkeitraum, zu verstehen.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Weiterer Gegenstand der Erfindung ist ein Verfahren zur Erkennung und Verfolgung von Gegenständen in einem Sichtbereich eines Sensors zur Erfassung elektromagnetischer Strahlung, insbesondere eines Laserscanners, bei dem mit dem Sensor zeitlich aufeinanderfolgend tiefenaufgelöste Bilder wenigstens eines Teils seines Sichtbereichs erfaßt werden, und bei dem die erfaßten Bilder mit dem erfindungsgemäßen Verfahren zur Erkennung und Verfolgung von Objekten verarbeitet werden.

Schließlich ist Gegenstand der Erfindung eine Vorrichtung zur Erkennung und Verfolgung von Objekten mit mindestens einem zur Erfassung tiefenaufgelöster Bilder eines Überwachungsbereichs ausgebildeten Sensor zur Erfassung elektromagnetischer Strahlung, vorzugsweise einem optoelektronischer Sensor, insbesondere einem Laserscanner, und mit einer Datenverarbeitungseinrichtung, die zur Durchführung des erfindungsgemäßen Verfahrens ausgebildet ist.

Eine bevorzugte Ausführungsform der Erfindung wird im folgenden beispielhaft anhand der Zeichnungen erläutert. Es zeigen:

Fig. 1    eine schematische Draufsicht auf ein Fahrzeug mit einem Laserscanner und zwei Personenkraftwagen in einem Sicht- bereich des Laserscanners,

Fig. 2    ein Ablaufdiagramm für ein Verfahren zur Erkennung und Verfolgung von Objekten nach einer bevorzugten Ausfüh- rungsform der Erfindung, und

Fig. 3    eine schematische Darstellung des Fahrzeugs in Fig. 1 und zweier weiterer Fahrzeuge im Sichtbereich des Laserscan- ners.

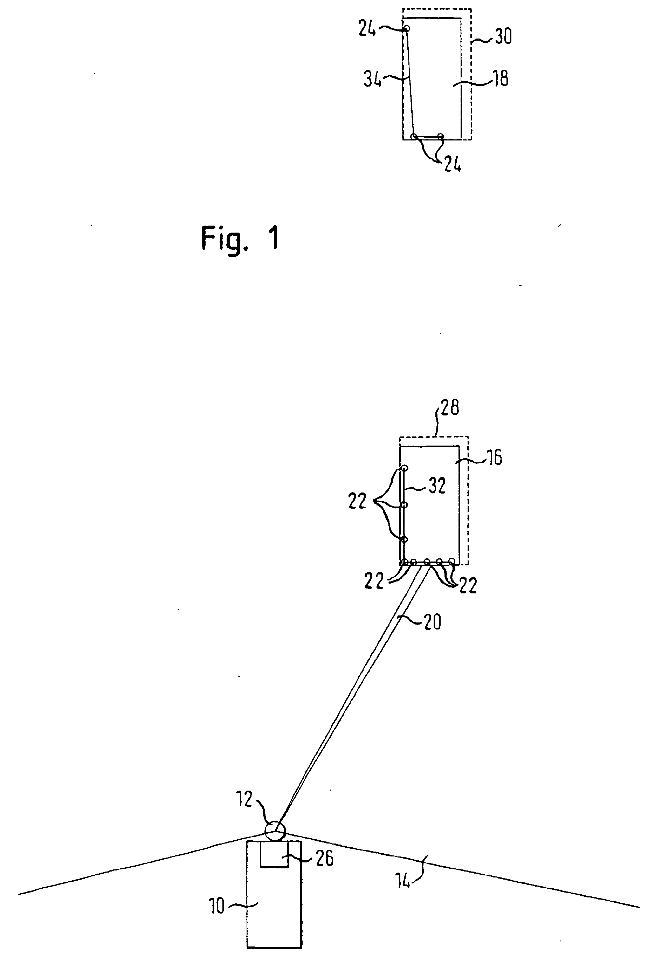

In Fig. 1 ist an der Frontseite eines Fahrzeugs 10 ein Laserscanner 12 angeordnet, dessen Sichtbereich 14 einen Teil des in Fahrtrichtung vor dem Fahrzeug liegenden Bereichs umfaßt. Im Sichtbereich 14 befinden sich zwei Personenkraftwagen 16 und 18.

Der Laserscanner 12 tastet seinen Sichtbereich 14 mit einem umlaufenden, gepulsten Strahlungsbündel 20 ab und erfaßt die Position von Gegenstandspunkten 22 und 24 der Personenkraftwagen 16 und 18, an denen ein Puls des Strahlungsbündels 20 reflektiert wurde, anhand des Winkels, bei dem der Strahlungspuls ausgesandt wurde, und des Abstands zum Laserscanner 12, der sich aus der Laufzeit des Strahlungspulses von der Abstrahlung bis zum Empfang nach der Reflexion ergibt. Bei einer Abtastung des Sichtbereichs 14 wird somit ein tiefenaufgelöstes Bild erfaßt, das die bei der Abtastung erfaßten Bildpunkte umfaßt, die zumindest die Koordinaten der Gegenstandspunkte 22 und 24 enthalten, an denen das Strahlungsbündel 20 reflektiert wurde. Im folgenden wird bei einer Bezugsnahme auf die Figuren nicht mehr zwischen Bildpunkten und Gegenstandspunkten unterschieden.

In Fig. 1 ist zur besseren Darstellung nur ein Laserscanner mit einem sehr geringen Auflösungsvermögen gezeigt. Tatsächliche Laserscanner können eine wesentlich höhere Winkelauflösung von zum Beispiel 0,25˚ aufweisen.

Die Aktualisierung der vollständigen Bilder erfolgt in einem zeitlichen Abstand T.

Die von dem Laserscanner 12 erfaßten Bilder werden, gegebenenfalls nach einer Korrektur der Koordinaten der Bildpunkte, an eine Datenverarbeitungseinrichtung 26 in dem Fahrzeug 10 ausgegeben, in der eine Weiterverarbeitung der Bilder stattfindet. Die Datenverarbeitungseinrichtung 26 weist dazu, in den Figuren nicht gezeigt, einen Prozessor und einen Speicher sowie eine Schnittstelle zur Übertragung der Daten von dem Laserscanner 12 auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Zur Erkennung und Verfolgung von Objekten wird ein Objekterkennungs- und -verfolgungsverfahren nach einer bevorzugten Ausführungsform der Erfindung in der Datenverarbeitungseinrichtung 26 ausgeführt.

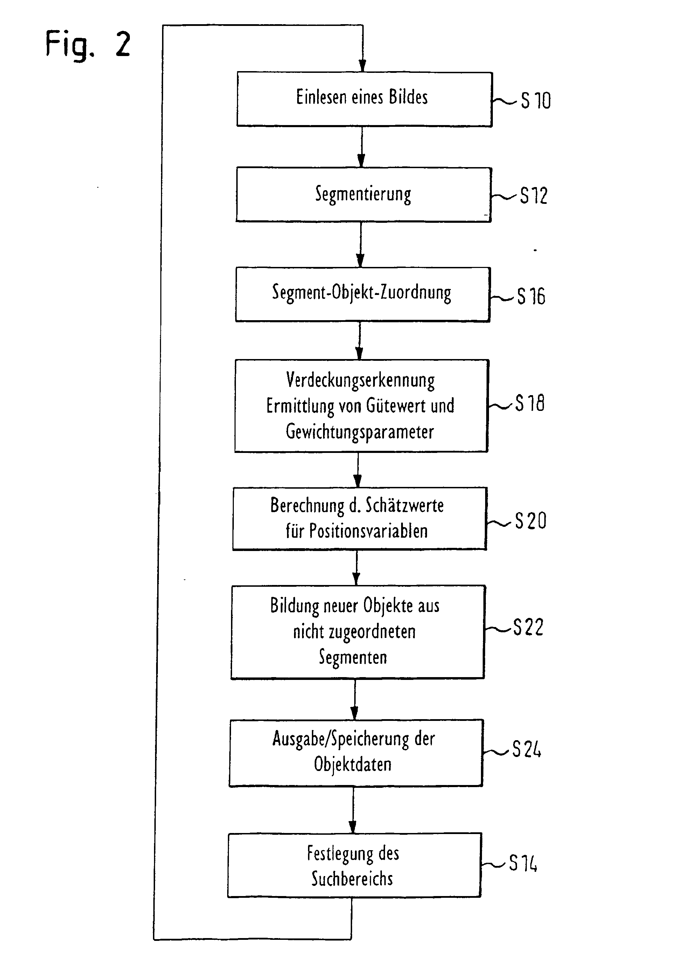

In diesem Beispiel sind zur Klassifizierung von Objekten Objektklassen vorgesehen, von denen im folgenden nur die drei Objektklassen beschrieben werden, denen Objekte in den Fig. 1 und 2 zugeordnet sind. Jedem Objekt einer Objektklasse ist als Eigenschaft eine Objektbox zugeordnet, die objektklassenspezifisch in diesem Beispiel die Form eines Rechtecks aufweist, dessen Länge und Breite in einem objektklassenspezifischen Wertebereich liegen.

Im folgenden werden Objektklassen für Personenkraftwagen, Zweiräder sowie Lastkraftwagen verwendet.

Objekte der Objektklasse Personenkraftwagen entsprechen Gegenständen, die in grober Näherung z. B. durch ein Rechteck mit einer Länge in einem Bereich zwischen 3 m und 5,5 m und einer Breite in einem Bereich zwischen 1 m und 2 m wiedergegeben werden können. Objekte der Objektklasse Zweirad stellen Gegenstände dar, die in grober Näherung z. B. ebenfalls durch ein Rechteck darstellbar sind, dessen Länge in einem Bereich zwischen 1,5 m und 2,5 m und dessen Breite in einem Bereich zwischen 0,5 m und 1 m liegt. Objekte der Objektklasse Lastkraftwagen schließlich stellen Gegenstände dar, die in grober Näherung z. B. durch ein Rechteck darstellbar sind, dessen Länge in einem Bereich zwischen 6 m und 20 m und dessen Breite in einem Bereich zwischen 2 m und 2,5 m liegt.

Jedem Objekt einer solchen Objektklasse ist eine rechteckige Objektbox zugeordnet, deren Ausdehnung den maximalen Ausdehnungen der die Objektklasse festlegenden Rechtecke entspricht, soweit nicht im Laufe des Verfahrens eine Adaption der Größe der Objektbox stattgefunden hat. Den Personenkraftwagen 16 und 18 sind daher die in Fig. 1 eng gepunktet gezeichneten Objektboxen 28 und 30 zugeordnet, die eine Länge von 5,5 m und eine Breite von 2 m aufweisen.

Zur Objekterkennung und -verfolgung wird ein erfindungsgemäß veränderter Kalman-Filter verwendet, der in diesem Beispiel in linearisierter Form verwendet wird. Dabei bezeichnet $X^{(n)}(k)$ den Vektor mit Zustandsvariablen, die den Zustand des Objekts n bei der Iteration k beschreiben und als Positionsvariablen die Positionskoordinaten $x^{(n)}(k)$ und $y^{(n)}(k)$ eines dem Objekt n zugeordneten Referenzpunkts in einem ortsfesten Koordinatensystem, im Beispiel des geometrischen Schwerpunkt der dem Objekt n zugeordneten Objektbox, umfassen. $Z^{(n)}(k)$ bezeichnet den Vektor von Meßgrößen für das Objekt n bei der Messung für die Iteration k, die aus erfaßten und dem Objekt n zugeordneten Bildpunkten bestimmt und bei der Objekterkennung und -verfolgung verwendet werden. Als Meßgröße für ein Objekt, für die Meßwerte erfaßt werden, wird hier die Position des Schwerpunkts der Objektbox verwendet, die durch entsprechende Koordinaten gegeben ist.

Die dem Verfahren zugrunde liegenden Gleichungen für die Zustandsvariablen und Meßgrößen haben, wie bei einem dem Fachmann bekannten Kalman-Filter, folgende Form:

$$X^{(n)}(k+1) = F^{(n)} X^{(n)}(k) + u^{(n)}(k)$$

$$Z^{(n)}(k) = H^{(n)} X^{(n)}(k) + w^{(n)}(k)$$

wobei $F^{(n)}$ eine Matrix ist, die die deterministische Zeitentwicklung der Zustandsparameter $X^{(n)}$ des Objekts n bestimmt. Mit der Matrix $H^{(n)}$ sind die Meßgrößen $Z^{(n)}$ aus den Zustandsparametern $X^{(n)}$ bestimmbar. $u^{(n)}$ und $w^{(n)}$ bezeichnen jeweils ein weißes, mittelwertfreies Rauschen für die Zustandsparameter und die Meßgrößen, wobei $u^{(n)}$ und $w^{(n)}$ miteinander unkorreliert sind. Sie weisen aber jeweils selbst durch eine entsprechende Kovarianzmatrix $Q^{(n)}$ bzw. $R^{(n)}$ gegebene Korrelationen auf.

Das eigentliche zur Beschreibung der zeitlichen Entwicklung der Zustandsvariablen verwendete Modell wird durch die erste Gleichung und die Kovarianzmatrix $\Omega^{(n)}$ gegeben.

In dem Beispiel hier werden die Objekte aller Objektklassen durch nur einen Modelltyp beschrieben, bei dem die deterministische Bewegung der Objekte als geradlinig gleichförmig angenommen wird. Dabei umfassen die Zustandsvariablen für die Objekte neben den Positionsvariablen die Geschwindigkeiten in den beiden Koordinatenrichtungen, $v_x^{(n)}$, $v_y^{(n)}$, wobei die Koordinaten und Geschwindigkeiten in einem raumfesten kartesischen Koordinatensystem mit x- und y-Achsen angegeben sind. Der Vektor $X^{(n)}$ der Zustandsparameter für die Iteration k lautet daher

$$X^{(n)}(k) = (x^{(n)}(k),\ y^{(n)}(k),\ v_x^{(n)}(k),\ v_y^{(n)}(k)).$$

Die Matrix $F^{(n)}$ hat dann die Form

$$F^{(n)} = \begin{pmatrix} 1 & 0 & T & 0 \\ 0 & 1 & 0 & T \\ 0 & 0 & 1 & 0 \\ 0 & 0 & 0 & 1 \end{pmatrix}.$$

Durch das Rauschen w werden unter anderem Bewegungen aufgrund nicht vorhersehbarer Beschleunigungen eines Gegenstands, beispielsweise des Personenkraftwagens 16 oder 18, berücksichtigt. Die Kovarianzmatrix $Q^{(n)}$ lautet daher:

$$Q^{(n)} = \begin{pmatrix} \left(\frac{1}{2}aT^2\right)^2 & 0 & \frac{1}{2}a^2T^3 & 0 \\ 0 & \left(\frac{1}{2}aT^2\right)^2 & 0 & \frac{1}{2}a^2T^3 \\ \frac{1}{2}a^2T^3 & 0 & (aT)^2 & 0 \\ 0 & \frac{1}{2}a^2T^3 & \cdot 0 & (aT)^2 \end{pmatrix}.$$

Hierbei bezeichnet a die objektklassenspezifische, maximal mögliche Beschleunigung für ein Objekt der entsprechenden Objektklasse, wobei der Übersicht halber das Superskript für das Objekt weggelassen wurde. Die Varianzen und Kovarianzen ergeben sich daraus, daß aufgrund einer maximalen Beschleunigung in der Zeit T maximal die Strecke $1/2\,a\cdot T^2$ zurückgelegt bzw. sich die Geschwindigkeit um maximal $a\cdot T$ verändert haben kann. Durch Produktbildung ergeben sich Matrixelemente für die Varianzen und Kovarianzen der Koordinaten und der zugehörigen Geschwindigkeiten, wobei die Nichtdiagonalterme sich daraus ergeben, daß eine Geschwindigkeitsänderung um $a.T$ mit einer entsprechenden Änderung der Position von $1/2\,a\cdot T^2$ korreliert ist. Als Wert für a wird in der Objektklasse Personenkraftwagen etwa $10\ m/s^2$ angenommen.

Als Meßgrößen für den Kalman-Filter werden die Koordinaten des Schwerpunktes der Objektbox des Objekts verwendet. Daher lautet der Vektor der Meßgrößen $Z^{(n)}=(Z_x^{(n)},Z_y^{(n)})$ mit den gemessenen Schwerpunktskoordinaten $Z_x^{(n)}$ und $Z_y^{(n)}$ und die Matrix H hat die Form

$$H^1 = \begin{pmatrix} 1 & 0 & 0 & 0 \\ 0 & 1 & 0 & 0 \end{pmatrix}$$

Die Kovarianzmatrix $R^{(n)}$ ist im wesentlichen durch das Auflösungsvermögen bzw. die Meßgenauigkeit des Laserscanners 12 gegeben und muß hier nicht genauer beschrieben werden.

Erfindungsgemäß werden neue Schätzwerte $x_s^{(n)}(k+1)$ und $y_s^{(n)}(k+1)$ für die Positionsvariablen $x^{(n)}$ und $y^{(n)}$ für die Iteration $k+1$ in Abhängigkeit von einem Gewichtungsparameter $g(K^{(n)}(k+1))$, der von einem Gütewert $K^{(n)}(k+1)$ des Meßwerts $Z^{(n)}(k+1)$ für die Position des Objekts n abhängt, gemäß folgender Beziehung ermittelt:

$$x_S^{(n)}(k+1) = g(K^{(n)}(k+1))\, Z_x^{(n)}(k+1) + (1 - g(K^{(n)}(k+1)))\, x_{S\ Kalman}^{(n)}(k+1)$$

$$y_S^{(n)}(k+1) = g(K^{(n)}(k+1))\, Z_y^{(n)}(k+1) + (1 - g(K^{(n)}(k+1)))\, y_{S\ Kalman}^{(n)}(k+1).$$

Dabei bezeichnen $Z_x(n)$ und $Z_y^{(n)}$ die den Positionskoordinaten entsprechenden Komponenten des Vektors $Z^{(n)}$ der Meßgrößen und $x_{S\ Kalman}$ und $y_{S\ Kalman}$ die mit dem konventionellen Kaiman-Filter ermittelten Schätzwerte für die Positionskoordinaten. Der Gewichtungsparameter kann nur Werte zwischen 0 und 1 annehmen.

Der prädizierte Wert der den Positionskoordinaten entsprechenden Komponenten des Vektors $Z^{(n)}$ der Meßgrößen ergibt sich anhand der bekannten Formeln für den dem Fachmann bereits bekannten Kalman-Filter, in der jedoch die erfindungsgemäßen Schätzwerte $x_s^{(n)}$ und $y_s^{(n)}$ und nicht die Kalman-Schätzwerte $x_{S\ Kalman}^{(n)}$ und $y_{S\ Kalman}^{(n)}$ verwendet werden. In dem erfindungsgemäßen Schätzwert für den Vektor der Zustandsvariablen $X_s^{(n)}$ sind daher gegenüber dem Vektor $X_{s\ kalman}^{(n)}$ für den konventionellen Schätzwert nur die Werte für die Koordinaten verändert, die Komponenten für die Geschwindigkeiten sind unverändert.

Die Gleichungen für den Kalman-Filter lauten:

$$\hat{X}^{(n)}(k+1) = F^{(n)} X_S^{(n)}(k)$$

$$\hat{Z}^{(n)}(k+1) = H^{(n)} \hat{X}^{(n)}(k+1)$$

$$\hat{P}^{(n)}(k+1) = F^{(n)} P^{(n)} \left(F^{(n)}\right)^T + Q^{(n)}$$

$$P^{(n)}(k+1) = \hat{P}^{(n)}(k+1) - W^{(n)}(k+1) S^{(n)}(k+1) \left(W^{(n)}(k+1)\right)^T$$

$$\hat{S}^{(n)}(k+1) = H^{(n)} \hat{P}^{(n)}(k+1) \left(H^{(n)}\right)^T$$

$$S^{(n)}(k+1) = H^{(n)} \hat{P}^{(n)} \left(H^{(n)}\right)^T + R^{(n)}$$

$$W^{(n)}(k+1) = \hat{P}^{(n)}(k+1) \left(H^{(n)}\right)^T \left(S^{(n)}(k+1)\right)^{-1}$$

$$X_{S\ Kalman}^{(n)} = \hat{X}^{(n)}(k+1) + W^{(n)}(k+1)(Z^{(n)}(k+1) - \hat{Z}^{(n)}(k+1))$$

wobei in der ersten Gleichung bereits erfindungsgemäß und in Abweichung von der bekannten Form des Kalman-Filters der gewichtete Schätzwert $X_s^{(n)}$ statt des Schätzwerts $X_{s\ kalman}^{(n)}$ eingesetzt wurde.

In den Formeln bezeichnen $\hat{X}^{(n)}$ (k+1) und $\hat{Z}^{(n)}$ (k+1) die prädizierten Werte der Zustandsvariable $X^{(n)}$ bzw. der Meßgröße $Z^{(n)}$ in der Iteration k+1, $P^{(n)}$(k+1) und $\hat{P}^{(n)}$(k+1) den Schätzwert bzw. den prädizierten Wert der Kovarianzmatrix für die Zustandsvariablen, $S^{(n)}$(k+1) und $\hat{S}^{(n)}$(k+1) den Schätzwert bzw. den prädizierten Wert der Kovarianzmatrix für die Meßgrößen $Z^{(n)}$ und $W^{(n)}$(k+1) die Kalman-Matrix für die Iteration k+1. Mit dem Superskript "T" ist jeweils die transponierte Matrix bezeichnet.

Der konkrete Ablauf des Verfahrens ist grob schematisch in Fig. 2 dargestellt.

Bei einer neuen Iteration wird zunächst in Schritt S 10 ein neues Bild von dem Laserscanner 12 eingelesen.

In Schritt S 12 wird dann das Bild segmentiert. Dazu werden Bildpunkte zu Segmenten zusammengefaßt, die einen Bildpunkt oder eine Menge aller Bildpunkten umfassen, von denen jeweils wenigstens zwei einen Abstand aufweisen, der kleiner als ein vorgegebener Maximalabstand ist, und die keine gemeinsamen Bildpunkte aufweisen. In Fig. 1 bilden beispielsweise die Bildpunkte 22 und 24 jeweils ein Segment 32 bzw. 34. Die Segmente sind dabei durch die mit einer durchgezogenen Linie verbundenen, dem Segment zugeordneten Bildpunkte dargestellt.

Um in Schritt S 12 gebildete Segmente einem bereits erkannten Objekt in Schritt S 16 zuzuordnen, wurden in der vorhergehenden Iteration in Schritt S14, der für alle Objekte durchgeführt wird, für jedes Objekt Suchbereiche bestimmt. Dazu wurden mittels der oben genannten Formel Vektoren $\hat{Z}^{(n)}$(k+1) für die prädizierten Meßgrößen und anhand der oben angegebenen, bekannten Formeln für die Kalman-Filterung prädizierte Kovarianzmatrizen $\hat{S}^{(n)}(k+1)$ für die Meßgrößen ermittelt. In die Prädiktion der Kovarianzmatrizen $\hat{S}^{(n)}(k+1)$ gehen insbesondere die Kovarianzmatrizen $Q^{(n)}$ der Zustandsparameter, nicht aber der Gewichtungsparameter g ein.

Dann wurde unter Verwendung der prädizierten Meßgrößen und Kovarianzmatrizen ein Suchbereich festgelegt, in dem nach Bildpunkten bzw. Segmenten für das Objekt gesucht wird. Unter der Annahme, daß die prädizierten Meßwerte normalverteilt sind, kann eine Region angegeben werden, in der der zugehörige Meßwert eines Objekts mit hoher Wahrscheinlichkeit liegen muß. Unter Vorgabe einer Mindestwahrscheinlichkeit y, den durch Messung ermittelten Vektor der Meßgrößen $Z^{(n)}(k+1)$ in dem Suchbereich zu finden, ergibt sich der Suchbereich für den Schwerpunkt des Objekts aus den entsprechenden Komponenten der Vektoren der Meßgrößen in der Menge aller Vektoren Y, die der Bedingung

$$(Y - \hat{Z}^{(n)}(k+1)) \ (\hat{S}^{(n)}(k+1))^{-1} \ (Y - \hat{Z}^{(n)}(k+1)) < \gamma$$

genügen.

In Schritt S 16 erfolgt dann die Zuordnung von Segmenten in dem in Schritt S 14 bestimmten Suchbereich zu dem Objekt, indem die dem Objekt zugeordnete Objektbox durch Translationen und/oder Rotationen um den Schwerpunkt der Objektbox so positioniert wird, daß ein oder mehrere Segmente innerhalb der Objektbox liegen. Aus der Lage des Schwerpunkts der Objektbox ergibt sich dann der Meßwert $Z^{(n)}$ für die Schwerpunktskoordinaten.

In Schritt S 18 werden dann der Gütewert und der Gewichtungsparameter für das Objekt berechnet. Hierzu wird als Gütewert das Verhältnis der Anzahl der für ein Objekt n erfaßten Bildpunkte $N^{(n)}$ zu einer vorgegebenen objektklassenspezifischen Referenzanzahl $N_{Ref\ Klasse}$ von Bildpunkten ermittelt. Die objektklassenspezifische Referenzanzahl von Bildpunkten $N_{Ref\ Klasse}$ wird anhand der objektklassenspezifischen Objektbox unter Berücksichtigung des Auflösungsvermögens des Laserscanners 12 durch Variation der Lage der Objektbox zu dem Sensor theoretisch ermittelt und zur Verwendung bei dem Verfahren gespeichert.

Der Gütewert wird somit auch in Abhängigkeit von der dem Objekt zugeordneten Objektklasse bestimmt.

In Fig. 1 ergibt sich für den Personenkraftwagen 16 eine hohe Anzahl von Bildpunkten $N^{(16)}$, nämlich 8 Bildpunkte, während sich für den Personenkraftwagen 18 gleicher Größe aufgrund der größeren Entfernung von dem Laserscanner 12 und aufgrund einer anderen Winkellage zu der Längsachse des Fahrzeugs 10 und damit zu dem Laserscanner 12 eine Anzahl $N^{(18)}$ von nur 3 Bildpunkten ergibt.

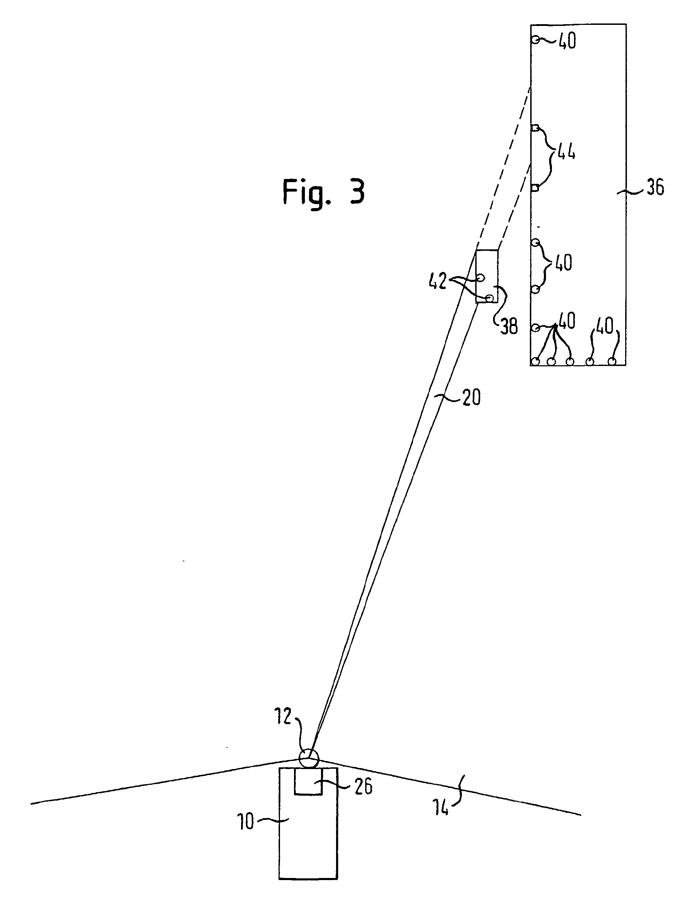

In der Szene in Fig. 3 befinden sich im Sichtbereich 14 des an dem Fahrzeug 10 angeordneten Laserscanners 12 ein Lastkraftwagen 36 und ein Zweirad 38, von denen jeweils durch Kreise angedeutete Bildpunkte 40 und 42 erfaßt werden. Von dem Lastkraftwagen 36 werden nur 9 Bildpunkte erfaßt, da ein Teil des Lastkraftwagens 36 durch das Zweirad 38 verdeckt ist. Es wird daher bei dem Verfahren vor der Ermittlung des Gütewertes eine Verdeckungserkennung durchgeführt, die nicht näher erläutert werden muß. Bei Erkennung eines Objekts, das teilweise durch ein anderes, zwischen dem Objekt und dem Laserscanner 12 liegendes Objekt verdeckt wird, werden dann verdeckte Bildpunkte rekonstruiert. In Fig. 3 sind dies die durch Quadrate angedeuteten rekonstruierten Bildpunkte 44.

Als Anzahl der dem Objekt zugeordneten Bildpunkte wird die Summe der tatsächlich erfaßten und der rekonstruierten Bildpunkte verwendet, im Beispiel des Lastkraftwagens 36 also der Wert 11.

Aus den Gütewerten K wird der Gewichtungsparameter z. B. gemäß der Formel

$$g(K^{(n)}) = \tanh(p \cdot K^{(n)}) = \tanh(p \cdot N^{(n)}/N_{Ref\ Klasse})$$

gebildet, wobei p ein Parameter ist, über den steuerbar ist, wie stark der Gewichtungsparameter von dem Gütewert abhängen soll. Insbesondere legt der Parameter den maximalen Wert des Gewichtungsparameters g = tanh(p) fest. Im Beispiel kann er etwa auf den Wert 3 gesetzt werden.

Damit ergibt sich beispielsweise für das dem Personenkraftwagen 16 zugeordnete Objekt ein verglichen mit dem Gütewert für das andere, dem weiter von dem Laserscanner entfernten Personenkraftwagen 18 zugeordneten Objekt höherer Gütewert und damit ein deutlich höherer Gewichtungsparameter, so daß der Meßwert bei dem Personenkraftwagen 16 sehr viel stärker in den Schätzwert für die Positionsvariable eingeht als bei dem Personenkraftwagen 18.

In Schritt S20 wird dann für jedes Objekt die Schätzwerte $X_s^{(n)}$, d. h. insbesondere $x_s^{(n)}$ und $y_s^{(n)}$ erfindungsgemäß nach der oben genannten Formel unter Verwendung des Gewichtungsparameters $g(K^{(n)})$ bestimmt. Für Objekte, denen keine Segmente zugeordnet werden konnten, wird als neuer Schätzwert für die Zustandsparameter und die Varianzen der zuletzt prädizierte Wert verwendet. Danach wird geprüft, ob die prädizierte Varianz der Meßgrößen für die Position des Objekts einen vorgegebenen Schwellwert übersteigt. Ist dies der Fall, wird das Objekt gelöscht, da es dann als zu unsicher gilt. Ansonsten wird es wie ein normales Objekt weiterbehandelt.

In Schritt S22 werden dann für bisher keinem Objekt zugeordnete Segmente neue Objekte generiert.

In Schritt S24 werden schließlich für die Objekte entsprechende Objektdaten ausgegeben bzw. gespeichert.

In Schritt S 14 werden, wie oben bereits geschildert, für jedes Objekt mittels der oben genannten Formel Vektoren $\hat{Z}^{(n)}(k+1)$ für die prädizierten Meßgrößen und anhand der oben angegebenen, bekannten Formeln für die Kalman-Filterung prädizierte Kovarianzmatrizen $\hat{S}^{(n)}(k+1)$ für die Meßgrößen ermittelt.

Darufhin wird das Verfahren nach Erfassung eines neuen Bildes mit Schritt S 10 fortgesetzt.

Damit erlaubt es das hier geschilderte, beispielhafte Verfahren nach einer bevorzugten Ausführungsform der Erfindung, einerseits genaue Schätzwerte für die Objektposition zu bestimmen. Wenn Meßwerte hoher Güte vorliegen, werden die Beiträge der Meßwerte zu den Schätzwerten hoch gewichtet. Andererseits bleibt die Größe des Suchbereichs von dem Gütewert bzw. dem Gewichtungsparameter unbeeinflußt, so daß Objekte mit hoher Sicherheit wiedererkannt werden können.

In einem anderen Ausführungsbeispiel wird der Parameter p situationsabhängig angepaßt. Beispielsweise kann hier über andere Verfahren erkannt werden, ob sich das Fahrzeug auf einer Autobahn oder im Stadtverkehr befindet. Da die Bewegungen im Stadtverkehr schlechter vorhersehbar sind, könnte dann der Wert des Parameters p gegenüber dem Wert für Autobahnen heraufgesetzt sein.

**Bezugszeichenliste**

10   Fahrzeug
12   Laserscanner
14   Sichtbereich
16   Personenkraftwagen
18   Personenkraftwagen
20   Strahlungsbündel
22   Gegenstands- bzw. Bildpunkte
24   Gegenstands- bzw. Bildpunkte
26   Datenverarbeitungseinrichtung
28   Objektbox
30   Objektbox
32   Segment
34   Segment
36   Lastkraftwagen
38   Zweirad
40   Bildpunkte
42   Bildpunkte
44   rekonstruierte Bildpunkte

**Patentansprüche**

1. Verfahren zur Erkennung und Verfolgung von Objekten auf der Basis von von wenigstens einem Sensor zur Erfassung elektromagnetischer Strahlung, insbesondere einem Laserscanner (12), erfaßten, tiefenaufgelösten, Bildpunkte (22, 24, 40, 42) enthaltenden Bildern von Gegenständen (16, 18, 36, 38) in einem Sichtbereich (14) des Sensors (12), bei dem

   - die Erkennung und Verfolgung unter Verwendung von den Objekten zugeordneten Modellen für die zeitliche Entwicklung von Positionsvariablen erfolgt, mit denen die Position des jeweiligen Objekts bestimmbar ist,
   - einem der Objekte zuzuordnende Bildpunkte (22, 24, 40, 42) in dem Bild gesucht werden,
   - bei Auffinden von dem Objekt zuzuordnenden Bildpunkten (22, 24, 40, 42) aus diesen aktuelle Meßwerte für die Position des Objekts gebildet werden und
   - unter Verwendung der aktuellen Meßwerte für die Position des Objekts und von Schätzwerten der Positionsvariablen und/oder Meßwerten für die Position des Objekts aus einer vorhergehenden Iteration Schätzwerte für die Positionsvariablen für das Objekt in der aktuellen Iteration berechnet werden,

**dadurch gekennzeichnet,**

**daß** die Beiträge der aktuellen Meßwerte für die Position des Objekts einerseits und der Schätzwerte der Positionsvariablen und/oder Meßwerte für die Position des Objekts aus einer vorhergehenden Iteration andererseits in Abhängigkeit von einem Gewichtungsparameter gegeneinander gewichtet werden, der von einem aus dem Bild ermittelten Gütewert der aktuellen Meßwerte abhängt, wobei die Abhängigkeit des Schätzwerts von den aktuellen Meßwerten mit zunehmendem Gütewert der Meßwerte zumindest in einem vorgegebenen Bereich von Gütewerten zunimmt.

2. Verfahren nach Anspruch 1,
   **dadurch gekennzeichnet,**
   **daß** in dem Bild für jedes Objekt ein Suchbereich ermittelt wird, in dem nach dem Objekt zuzuordnenden Bildpunkten (22, 24, 40, 42) gesucht wird, dessen Lage von den Schätzwerten der Positionsvariablen und/oder den Meßwerten für die Position des Objekts aus einer vorhergehenden Iteration abhängt, und dessen Größe unabhängig von dem in der vorhergehenden Iteration ermittelten Gütewert ist.

3. Verfahren nach Anspruch 1 oder 2,
   **dadurch gekennzeichnet,**
   **daß** der Schätzwert als durch den Gewichtungsparameter parametrisierter gewichteter Mittelwert aus dem Meßwert und einem anderen, von dem Schätzwert der Positionsvariablen in einer vorhergehenden Iteration abhängenden Wert gebildet wird.

4. Verfahren nach einem der vorhergehenden Ansprüche,
   **dadurch gekennzeichnet,**
   **daß** in dem Gewichtungsparameter das Auflösungsvermögen des Sensors (12) im Bereich der dem Objekt zugeordneten Bildpunkte (22, 24, 40, 42) berücksichtigt wird.

5. Verfahren nach einem der vorhergehenden Ansprüche,
   **dadurch gekennzeichnet,**
   **daß** der Gewichtungsparameter vom einem Abstand der zur Bildung der Meßwerte verwendeten, dem Objekt zugeordneten Bildpunkte (22, 24, 40, 42) von dem Sensor (12) abhängt.

6. Verfahren nach einem der vorhergehenden Ansprüche,
   **dadurch gekennzeichnet,**
   **daß** zur Klassifizierung von Objekten mehrere Objektklassen vorgesehen werden, die wenigstens eine Eigenschaft von Objekten betreffen, die aus wenigstens einem der tiefenaufgelösten Bilder bestimmbar ist,
   **daß** dem Objekt eine der Objektklassen zugeordnet ist, und
   **daß** der Gewichtungsparameter in Abhängigkeit von der Objektklasse des Objekts bestimmt wird.

7. Verfahren nach Anspruch 6,
   **dadurch gekennzeichnet,**
   **daß** der Gütewert in Abhängigkeit von der Objektklasse des Objekts bestimmt wird.

8. Verfahren nach einem der vorhergehenden Ansprüche,
   **dadurch gekennzeichnet,**
   **daß** der Gewichtungsparameter situationsadaptiv verändert wird.

9. Verfahren nach einem der vorhergehenden Ansprüche,
   **dadurch gekennzeichnet,**
   **daß** dem Objekt als statische Eigenschaft eine Objektbox (28, 30) zugeordnet ist, die eine Ausdehnung des Objekts in der Bildebene darstellt, eine bestimmte Form und Größe aufweist und hinsichtlich Form und Größe dem durch das Objekt dargestellten Gegenstand entspricht, und
   **daß** der Gütewert in Abhängigkeit von den minimalen Abständen zwischen in der Objektbox (28, 30) liegenden Bildpunkten (22, 24, 40, 42) und dem Rand der Objektbox (28, 30) und von der Anzahl der in der Objektbox (28, 30) liegenden Bildpunkte (22, 24, 40, 42) bestimmt wird.

10. Verfahren nach einem der vorhergehenden Ansprüche,
    **dadurch gekennzeichnet,**
    **daß** dem Objekt eine Ausdehnung zugeordnet ist, und

**daß** der Gütewert unter Verwendung der Anzahl der dem Objekt zugeordneten Bildpunkte (22, 24, 40, 42) und einer Referenzanzahl von Bildpunkten für das Objekt und/oder der Länge der Umfangslinie des Objekts und/oder der Fläche des Objekts ermittelt wird.

**11.** Verfahren nach Anspruch 9 oder 10,
**dadurch gekennzeichnet,**
**daß** vor der Ermittlung des Gütewerts eine Verdeckungserkennung durchgeführt wird, bei der geprüft wird, ob ein Teil des durch das Objekt dargestellten Gegenstands durch einen zwischen dem Sensor (12) und dem Gegenstand (36) liegenden weiteren Gegenstand (38) verdeckt ist, und
**daß** bei der Bestimmung des Gütewerts eine erkannte Verdeckung berücksichtigt wird.

**12.** Verfahren nach einem der vorhergehenden Ansprüche,
**dadurch gekennzeichnet,**
**daß** dem Objekt als statische Eigenschaft eine Objektbox (28, 30) zugeordnet ist, die eine Ausdehnung des Objekts in der Bildebene darstellt, eine bestimmte Form und Größe aufweist und hinsichtlich Form und Größe dem durch das Objekt dargestellten Gegenstand entspricht,
**daß** aus den Bildpunkten (22, 24, 40, 42) Segmente (32, 34) gebildet werden, die jeweils einen einzelnen Bildpunkt oder eine Menge aller Bildpunkte umfassen, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen,
**daß** für das Objekt ein Suchbereich bestimmt wird,
**daß** in dem Suchbereich nach dem Objekt zuzuordnenden Segmenten (28, 30) gesucht und bei Auffinden eines Segments (28, 30) dieses dem Objekt zugeordnet wird,
**daß** in dem Fall, daß im Suchbereich kein dem Objekt zuzuordnendes Segment (28, 30) gefunden wird, aber ein Segment (28, 30) vorhanden ist, das keinem anderen Objekt zuzuordnen ist, das Segment (28, 30) dem Objekt zugeordnet wird, wenn die Objektbox (28, 30) so positionierbar ist, daß das Segment (28, 30) in der Objektbox (28, 30) liegt, und
**daß** der Gewichtungsparameter so gesetzt wird, daß der Schätzwert durch den unter Verwendung der Bildpunkte (22, 24, 40, 42) des zugeordneten Segments (28, 30) gebildeten Meßwert gegeben ist.

**13.** Computerprogramm mit Programmcode-Mitteln, um das Verfahren nach einem der Ansprüche 1 bis 12 durchzuführen, wenn das Programm auf einem Computer ausgeführt wird.

**14.** Computerprogrammprodukt mit Programmcode-Mitteln, die auf einem computerlesbaren Datenträger gespeichert sind, um das Verfahren nach einem der Ansprüche 1 bis 12 durchzuführen, wenn das Computerprogrammprodukt auf einem Computer ausgeführt wird.

**15.** Vorrichtung zur Erkennung und Verfolgung von Objekten mit mindestens einem zur Erfassung tiefenaufgelöster Bilder eines Überwachungsbereichs (14) ausgebildeten Sensor (12) zur Erfassung elektromagnetischer Strahlung, insbesondere einem Laserscanner (12), und mit einer Datenverarbeitungseinrichtung (26), die zur Durchführung des Verfahrens nach einem der Ansprüche 1 bis 12 ausgebildet ist.

**Claims**

**1.** A method for recognising and tracking objects on the basis of images of real objects (16, 18, 36, 38) containing depth-resolved picture elements (22, 24, 40, 42) and detected by at least one sensor for detecting electromagnetic radiation, in particular by a laser scanner (12), in a field of vision (14) of the sensor (12), wherein

- the recognition and detection takes place using models associated with the objects for the time development of position variables with which the position of the respective object can be determined;
- picture elements (22, 24, 40, 42) associated with one of the objects are sought in the image;
- on the finding of picture elements (22, 24, 40, 42) to be associated with the object, then current measured values for the position of the object are formed from them; and
- using the then current measured values for the position of the object and estimated values of the position variables and/or measured values for the position of the object from a preceding iteration, estimated values for the position variables are calculated for the object in the then current iteration,

**characterised in that**
the contributions of the then current measured values for the position of the object, on the one hand, and of the estimated values of the position variables and/or measured values for the position of the object from a preceding iteration, on the other hand, are weighted against one another in dependence on a weighting parameter which depends on a degree of quality of the then current measured values determined from the image, with the dependence of the estimated value on the then current measurement values increasing at least in a preset range as the degree of quality of the measured values increases.

2. A method in accordance with claim 1,
**characterised in that**
a search zone is determined for each object in the image, in which search zone a search is made for picture elements (22, 24, 40, 42) to be associated with the object whose position depends on the estimated values of the position variables and/or on the measured values for the position of the object from a preceding iteration and whose magnitude is independent of the degree of quality determined in the preceding iteration.

3. A method in accordance with claim 1 or claim 2,
**characterised in that**
the estimated value is formed as a weighted mean value parameterised by the weighting parameter from the measured value and from another value depending on the estimated value of the position variables in a preceding iteration.

4. A method in accordance with any one of the preceding claims,
**characterised in that**
the resolving power of the sensor (12) in the zone of the picture elements (22, 24, 40, 42) to be associated with the object is taken into account in the weighting parameter.

5. A method in accordance with any one of the preceding claims,
**characterised in that**
the weighting parameter depends on a distance from the sensor (12) of the picture elements (22, 24, 40, 42) used for forming the measured values and associated with the object.

6. A method in accordance with any one of the preceding claims,
**characterised in that**
a plurality of object classes are provided for the classification of objects which relate to at least one property of objects which can be determined from at least one of the depth resolved images;
**in that** one of the object classes is associated with the object; and **in that** the weighting parameter is determined in dependence on the object class of the object.

7. A method in accordance with claim 6,
**characterised in that**
the degree of quality is determined in dependence on the object class of the object.

8. A method in accordance with any one of the preceding claims,
**characterised in that**
the weighting parameters is changed in a situation-adaptive manner.

9. A method in accordance with any one of the preceding claims,
**characterised in that**
an object box (28, 30) is associated with the object as a static property and represents an extent of the object in the image plane, has a specific shape and size and corresponds to the real object represented by the object with respect to shape and size; and **in that** the degree of quality is determined in dependence on the minimal distances between picture elements (22, 24, 40, 42) disposed in the object box (28, 30) and the margin of the object box (28, 30) and on the number of the picture elements (22, 24, 40, 42) disposed in the object box (28, 30).

10. A method in accordance with any one of the preceding claims,
**characterised in that**
an extent is associated with the object; and
**in that** the degree of quality is determined using the number of picture elements (22, 24, 40, 42) and of a reference number of picture elements for the object and/or of the length of the peripheral line of the object and/or of the surface of the object.

11. A method in accordance with claim 9 or claim 10,
**characterised in that**
a hidden surface detection is carried out before the determination of the degree of quality in which a check is made whether a part of the real object represented by the object is hidden by a further real object (38) disposed between the sensor (12) and the real object (36); and
**in that** a recognised hidden surface is taken into account on the determination of the degree of quality.

12. A method in accordance with any one of the preceding claims,
**characterised in that**
an object box (28, 30) is associated with the object as a static property and represents an extent of the object in the image plane, has a specific shape and size and corresponds to the real object represented by the object with respect to shape and size;
**in that** segments (32, 34) are formed from the picture elements (22, 24, 40, 42) and each comprise an individual picture element or a set of all picture elements which each comprise an individual picture element or a set of all picture elements of which in each case at least two are defined in accordance with at least one segmentation criterion as belonging to the segment and which do not have any common picture elements among one another;
**in that** a search zone is determined for the object;
**in that** a search is made in the search zone for segments (28, 30) associated with the object and, when a segment (28, 30) is found, it is associated with the object;
**in that**, in the case that no segment (28, 30) to be associated with the object is found in the search zone, but a segment (28, 30) is present which is not to be associated with no other object, the segment (28, 30) is associated with the object when the object box (28, 30) can be positioned so that the segment (28, 30) is disposed in the object box (28, 30); and
**in that** the weighting parameter is set so that the estimated value is given by the measured value formed using the picture elements (22, 24, 40, 42) of the associated segment (28, 30).

13. A computer program with program code means to carry out the method in accordance with any one of the claims 1 to 12, when the program is installed on a computer.

14. A computer program product with program code means which are stored on a computer readable data carrier to carry out the method in accordance with any one of the claims 1 to 12, when the computer program product is installed on a computer.

15. An apparatus for recognising and tracking objects having at least one sensor (12) made for detecting depth-resolved images of a monitored zone (31, 14) for detecting electromagnetic radiation, in particular a laser scanner (12), and having a data processing device (26) which is made to carry out the method in accordance with any one of the claims 1 to 12.

**Revendications**

1. Procédé pour la reconnaissance et le suivi d'objets sur la base d'images à résolution en profondeur, saisies par au moins un capteur pour détecter un rayonnement électromagnétique, en particulier un scanner à laser (12) et contenant des points d'image (22, 24, 40, 42), d'objets (16, 18, 36, 38) dans une zone de vision (14) du capteur (12), dans lequel

- la reconnaissance et le suivi ont lieu en utilisant des modèles, associés aux objets, pour l'évolution temporelle de variables de position avec lesquelles la position de l'objet respectif peut être déterminée,
- on recherche dans l'image des points d'image (22, 24, 40, 42) à associer à l'un des objets,
- lorsqu'on trouve des points d'image (22, 24, 40, 42) à associer à l'objet, on forme à partir de ces points des valeurs de mesures actuelles pour la position de l'objet, et
- en utilisant les valeurs de mesures actuelles pour la position de l'objet et des valeurs estimatives des variables de position et/ou des valeurs de mesures pour la position de l'objet provenant d'une itération précédente, on calcule des valeurs estimatives pour les variables de position pour l'objet dans l'itération actuelle,

**caractérisé en ce que**
les contributions des valeurs de mesures actuelles pour la position de l'objet d'une part et des valeurs estimatives des variables de position et/ou des valeurs de mesures pour la position de l'objet provenant d'une itération précédente d'autre part sont pondérées mutuellement en fonction d'un paramètre de pondération qui dépend d'une valeur de qualité, déterminée à partir de l'image, des valeurs de mesures actuelles, et la dépendance de la valeur estimative par rapport aux valeurs de mesures actuelles augmente lorsque la valeur de qualité des valeurs de mesures augmente, au moins dans une plage prédéterminée de valeurs de qualité.

**2.** Procédé selon la revendication 1,
**caractérisé en ce que** l'on détermine dans l'image pour chaque objet une zone de recherche dans laquelle on recherche des points d'image (22, 24, 40, 42) à associer à l'objet dont la position dépend des valeurs estimatives des variables de position et/ou des valeurs de mesures pour la position de l'objet à partir d'une itération précédente, et sa taille est indépendante de la valeur de qualité déterminée dans l'itération précédente.

**3.** Procédé selon la revendication 1 ou 2,
**caractérisé en ce que** la valeur estimative est formée comme une valeur moyenne pondérée paramétrée par le paramètre de pondération, de la valeur de mesure et d'une autre valeur qui dépend de la valeur estimative des variables de position dans une itération précédente.

**4.** Procédé selon l'une des revendications précédentes,
**caractérisé en ce que**, dans le paramètre de pondération, on tient compte de la capacité de résolution du capteur (12) dans la région des points d'image (22, 24, 40, 42) associés à l'objet.

**5.** Procédé selon l'une des revendications précédentes,
**caractérisé en ce que** le paramètre de pondération dépend d'une distance entre les points d'image (22, 24, 40, 42), associés à l'objet et utilisés pour former les valeurs de mesures, et le capteur (12).

**6.** Procédé selon l'une des revendications précédentes,
**caractérisé en ce que**, pour la classification des objets on prévoit plusieurs classes d'objets qui concernent au moins une propriété des objets, laquelle peut être déterminée à partir de l'une au moins des images à résolution en profondeur,
**en ce que** l'une des classes d'objets est associée à l'objet, et
**en ce que** le paramètre de pondération est déterminé en fonction de la classe d'objet de l'objet.

**7.** Procédé selon la revendication 6,
**caractérisé en ce que** la valeur de qualité est déterminée en fonction de la classe d'objet de l'objet.

**8.** Procédé selon l'une des revendications précédentes,
**caractérisé en ce que** le paramètre de pondération est modifié de manière adaptative vis-à-vis de la situation.

**9.** Procédé selon l'une des revendications précédentes,
**caractérisé en ce qu'**une boîte-objet (28, 30) est associée à l'objet à titre de propriété statique, ladite boîte représentant une extension de l'objet dans le plan image, présentant une forme et une taille déterminées et, pour ce qui concerne la forme et la taille, correspondant à l'article représenté par l'objet, et
la valeur de qualité est déterminée en fonction des distances minimales entre les points d'image (22, 24, 40, 42) situés dans la boîte-objet (28, 30) et la bordure de la boîte-objet (28, 30), et du nombre des points d'image (22, 24, 40, 42) situés dans la boîte-objet (28, 30).

**10.** Procédé selon l'une des revendications précédentes,
**caractérisé en ce que**
une extension est associée à l'objet, et
la valeur de qualité est déterminée en utilisant le nombre des points d'image (22, 24, 40, 42) associés à l'objet et un nombre de référence de points d'image pour l'objet et/ou la longueur de la ligne périphérique de l'objet et/ou de la surface de l'objet.

**11.** Procédé selon la revendication 9 ou 10,
**caractérisé en ce que**, avant la détermination de la valeur de qualité, on exécute une reconnaissance de recouvrement dans laquelle on vérifie si une partie de l'article représenté par l'objet est recouverte par un autre article (38) situé entre le capteur (12) et l'article (36), et
lors de la détermination de la valeur de qualité, on tient compte d'un recouvrement reconnu.

12. Procédé selon l'une des revendications précédentes,
**caractérisé en ce qu'**on associe à l'objet à titre de propriété statique une boîte-objet (28, 30), qui représente une extension de l'objet dans le plan de l'image, qui présente une forme et une taille déterminées et qui, quant à la forme et à la taille, correspond à l'article représenté par l'objet,
à partir des points d'image (22, 24, 40, 42) on forme des segments (32, 34) qui contiennent chacun un point d'image individuel ou un groupe de tous les points d'image parmi lesquels respectivement au moins deux points d'image sont définis comme appartenant au segment en correspondance d'au moins un critère de segmentation, et les segments ne présentant entre eux aucun point d'image commun,
**en ce que** l'on détermine pour l'objet une zone de recherche,
**en ce que** l'on recherche dans la zone de recherche des segments (28, 30) à associer à l'objet et lorsqu'on trouve un segment (28, 30), celui-ci est associé à l'objet,
dans le cas où l'on ne trouve dans la zone de recherche aucun segment (28, 30) à associer à l'objet, mais il existe un segment (28, 30) qui ne peut être associé à aucun autre objet, **en ce que** le segment (28, 30) est associé à l'objet si la boîte-objet (28, 30) peut être positionnée de telle façon que le segment (28, 30) se trouve dans la boîte-objet (28, 30), et **en ce que** le paramètre de pondération est fixé de telle façon que la valeur estimative est donnée par la valeur de mesure formée en utilisant les points d'images (22, 24, 40, 42) du segment associé (28, 30).

13. Programme d'ordinateur avec des moyens formant code de programme pour mettre en oeuvre le procédé selon l'une des revendications 1 à 12, quand le programme est exécuté sur un ordinateur.

14. Produit de programme d'ordinateur comprenant des moyens formant code de programme qui seront mémorisés sur un support de données lisible à l'ordinateur, afin de mettre en oeuvre le procédé selon l'une des revendications 1 à 12 quand le produit de programme d'ordinateur est exécuté sur un ordinateur.

15. Appareil pour la reconnaissance et le suivi d'objets comprenant au moins un capteur (12), réalisé pour la détection d'images à résolution en profondeur d'une zone de surveillance (14), destiné à détecter un rayonnement électromagnétique, en particulier un scanneur à laser (12), et comprenant un système de traitement de données (26), qui est réalisé pour mettre en oeuvre le procédé selon l'une des revendications 1 à 12.

24

30

34

18

24

Fig. 1

28

16

22

32

22

22

20

12

26

14

10

# Fig. 2

```
            ┌─────────────────────────┐
            │   Einlesen eines Bildes  │──── S 10
            └─────────────────────────┘
                        │
                        ▼
            ┌─────────────────────────┐
            │       Segmentierung      │──── S 12
            └─────────────────────────┘
                        │
                        ▼
            ┌─────────────────────────┐
            │  Segment-Objekt-Zuordnung │──── S 16
            └─────────────────────────┘
                        │
                        ▼
            ┌─────────────────────────┐
            │   Verdeckungserkennung   │
            │  Ermittlung von Gütewert und │──── S 18
            │   Gewichtungsparameter   │
            └─────────────────────────┘
                        │
                        ▼
            ┌─────────────────────────┐
            │  Berechnung d. Schätzwerte │──── S 20
            │   für Positionsvariablen │
            └─────────────────────────┘
                        │
                        ▼
            ┌─────────────────────────┐
            │   Bildung neuer Objekte aus │
            │   nicht zugeordneten      │──── S 22
            │        Segmenten          │
            └─────────────────────────┘
                        │
                        ▼
            ┌─────────────────────────┐
            │  Ausgabe/Speicherung der │──── S 24
            │       Objektdaten         │
            └─────────────────────────┘
                        │
                        ▼
            ┌─────────────────────────┐
            │     Festlegung des       │──── S 14
            │      Suchbereichs        │
            └─────────────────────────┘
```

# Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10148071

- DE 10148068

**In der Beschreibung aufgeführte Nicht-Patentliteratur**

- **TAE-DOK EOM et al.** Hierarchical object recognition algorithm based on Kalman filter for adaptive cruise control system using scanning laser. *VEHICULAR TECHNOLOGY CONFERENCE,* 16. Mai 1999, vol. 3